# EUROPEAN PATENT SPECIFICATION

(11) **EP 3 750 123 B1**
(45) Date of publication and mention of the grant of the patent: **10.12.2025**
(21) Application number: 19701256.0
(22) Date of filing: 28.01.2019
(51) Int. Cl.: G06Q 10/087, B65D 71/00, B65G 1/04

(54) **SYSTEM FOR IDENTIFYING AND FOR USING PRODUCTS RECOVERED FOR REUSE IN A MIXING CYCLE**
SYSTEM ZUR IDENTIFIZIERUNG UND ZUR VERWENDUNG VON ZURÜCKGEWONNENEN PRODUKTEN ZUR WIEDERVERWENDUNG IN EINEM MISCHZYKLUS
SYSTÈME D'IDENTIFICATION ET D'UTILISATION DE PRODUITS RÉCUPÉRÉS POUR UNE RÉUTILISATION DANS UN CYCLE DE MÉLANGE

(30) Priority: 07.02.2018 FR 1851019
(43) Date of publication of application: 16.12.2020
(73) Proprietor: COMPAGNIE GENERALE DES ETABLISSEMENTS MICHELIN, 63000 Clermont-Ferrand (FR)
(72) Inventor: WILSON, Zack, 63040 CLERMONT-FERRAND Cedex 9 (FR); BONNET, Cédric, 63040 CLERMONT-FERRAND Cedex 9 (FR); DEWITT, Michael, Winston Salem, North Carolina 27106 (US); DRAKE, Anthony, 63040 CLERMONT-FERRAND Cedex 9 (FR); RICCIARDI, James, 63040 CLERMONT-FERRAND Cedex 9 (FR)
(74) Representative: M.F.P. Michelin
(86) International application number: PCT/EP2019/051978
(87) International publication number: WO 2019/154656

(56) References cited:
- WO-A1-01/24618
- WO-A1-2014/129535
- FR-A1- 2 855 500
- US-A- 5 281 073
- US-A- 6 039 375
- "The Mixing of Rubber", 1 January 1997, SPRINGER NETHERLANDS, Dordrecht, ISBN: 978-94-011-5824-4, article HANNON MARTIN J.: "Mixing of tire compounds", pages: 187 - 188, XP055853205, DOI: 10.1007/978-94-011-5824-4_11
- YANCHEN GAO ET AL: "RFID application in tire manufacturing logistics", ADVANCED MANAGEMENT SCIENCE (ICAMS), 2010 IEEE INTERNATIONAL CONFERENCE ON, IEEE, PISCATAWAY, NJ, USA, 9 July 2010 (2010-07-09), pages 109 - 112, XP031735868, ISBN: 978-1-4244-6931-4

## Description

### TECHNICAL FIELD

The invention relates in general to the production of rubber mixtures and of vehicle tyres produced therefrom. More particularly, the invention relates to the identification, management and reincorporation of recovered products for reuse after treatment as starter products used in a mixing process.

### CONTEXT

In the field of tyre manufacture, there are a number of machines that produce semi-finished products. The products produced by these machines are made up of at least two rubber mixtures having different properties (referred to as "complex products"). The machines perform various processes, including extrusion processes, assembly processes and stripping processes, in which some of what is manufactured cannot be used directly in the creation of a tyre (for example, during a change in size, a start-up, etc.). During start-ups, stoppages, changes in size and other known steps, it is commonplace for these machines to generate products that are not used downstream (for example, on the assembly machines). Likewise, on these tyre building machines for assembling tyres using the complex products produced beforehand (for example, machines known by the trade name VMI MAXX^{™}), products used by these machines cannot be put to use immediately on the production line. For example, the dimensional tolerances have not been met.

There are different kinds of complex products involved in tyre building. It is desirable to use complex products during the building of the tyre, because doing so reduces the number of product laying operations that need to be performed. The number of different rubber mixtures used in manufacturing a single tyre has a tendency to increase, so as to be able to optimize the properties of these mixtures according to the region of the tyre in which they are located.

Typically, the complex products that are not used "as is", but that can be recovered for reuse after treatment (referred to hereinafter as "recovered products for reuse after treatment", or "validated products"), are usually stored without any special consideration (for example, on pallets with dividers). Thus, complex products of various natures and various origins may find themselves on the same pallet.

YANCHEN GAO and AL has explained in the document "RFID application in tire manufacturing logistics" how to use RFID devices to quickly identify rubber semi-finished products made in a tire workshop. YANCHEN and AL only disclosed the use of RFID to replace barcode and make identification without any strategy or optimisation.

In order to optimize the use of the recovered products for reuse after treatment in rubber mixtures, the invention relates to the storage and reincorporation of the recovered products for reuse after treatment by using a single recovered-product identification. Although numerous types of rubber mixtures are envisaged in the tyre production processes, there are opportunities for recovering unused complex products for reuse downstream.

### SUMMARY

The invention relates to a system for identifying and using recovered products for reuse after treatment according to a production plan generated for carrying out at least one rubber mixing process using the identified recovered products for reuse after treatment. The system includes at least one container being provided with a space for filling the container with complex products originating from at least one manufacturing system so as to obtain containers filled with complex products. The system also includes a container subsystem in which the complex products are stored in corresponding containers, the container subsystem having a storage means with which the containers full of complex products are identified and in which they are stored as containers full of recovered products for reuse after treatment, the identification of each recovered product for reuse after treatment being married with the identification of each container so that the system, by recognizing a particular container, automatically recognizes a nature of the recovered product for reuse after treatment contained in the container. The system further includes a pallet subsystem in which pallets of containers of recovered products for reuse after treatment, originating from the container subsystem, are stored until the start of a campaign of a production plan generated for carrying out at least one rubber mixing process, the pallet subsystem having a storage means with which pallets are identified and in which pallets are stored according to the production plan, the pallets being constructed according to an automatic construction of at least one pallet having containers filled with recovered products for reuse after treatment that are retrieved from the storage means and that satisfy the production plan.

In certain embodiments, the system includes an identification means for marrying the identification of the pallets with the identification of the containers stored on the pallets, in which the identification means is integrated into at least one container retrieved from the storage means, at least one pallet of containers of recovered products for reuse after treatment that include the retrieved containers, or both. In some of these embodiments, the identification means includes an RFID tag that allows identification by an RFID reader.

In certain embodiments, at least one of the storage means of the container subsystem and the pallet subsystem includes an automatic storage system.

In certain embodiments, the system also includes a transfer zone shared in common between the container subsystem and the pallet subsystem in which the pallets are constructed before being stored in the pallet subsystem.

In certain embodiments, the system includes a movable gripper for placing and retrieving containers in relation to the container subsystem and also in relation to the pallet subsystem.

In certain embodiments, the system includes a robot for selectively placing and selectively removing at least one container with respect to the container subsystem according to at least one production plan generated to satisfy an ongoing production plan and one or more forthcoming production plans. In some of these embodiments, the robot includes a stacking device having a shuttle that operates on rails within the storage means.

In certain embodiments, the container includes a pair of long sides, a pair of short sides and a bottom that together form a space for filling the container with a specific complex product, and each container has legs that extend below the bottom so as to make the container stackable on a pallet or on itself. In some of these embodiments, each short side of the container includes the identification means that operates with an automated handling device. For some such embodiments, a square recess and a triangular recess are built into each short side of the container in correspondence with corresponding projections of the automated handling device so that the recesses and the projections allow the container to be suitably positioned by realigning a projection in a corresponding recess. In certain of these embodiments, the bottom of the container includes several optional orifices aligned along the length of the bottom to accept retractable fingers of a corresponding demoulding device.

In certain embodiments, the filled containers are assigned to places in the container subsystem according to the nature of the complex product, and the constructed pallets are assigned to places in the pallet subsystem according to the production plan.

In certain embodiments, the system is part of a tyre production installation having at least one mixer that is fed with the recovered products for reuse after treatment.

Further aspects of the invention will become obvious from the following detailed description.

### BRIEF DESCRIPTION OF THE DRAWINGS

The nature and various advantages of the invention will become more evident from reading the following detailed description, and from studying the attached drawings, in which the same reference numerals denote identical parts throughout, and in which:
Figure 1 depicts a schematic view of a system of the invention that carries out a method of identifying and using recovered products for reuse after treatment according to at least one production plan of a rubber mixing process using the identified recovered products for reuse after treatment.
Figure 2 depicts a front perspective view of a container that is intended to receive a corresponding recovered product, and Figure 3 depicts a bottom perspective view of the container of Figure 2.
Figure 4 depicts a partial perspective view of a container subsystem and of a pallet transfer zone.
Figures 5 and 6 depict partial perspective views of the container subsystem of Figure 4 with a stacking device.
Figure 7 depicts steps of the method of the invention carried out by the system of Figure 1.
Figure 8 depicts a density graph according to a simulation of a prior art process.
Figure 9 depicts a density graph according to a simulation of the process of the invention.

### DETAILED DESCRIPTION

The unused complex products (or "complex products") are identified into various kinds and various grades, and each kind and each grade designates a specific complex product, the properties of which are known. Each nature of complex product has specific properties that can be controlled in order to obtain the recovered products for reuse after treatment. In order to ensure that a recovered product has controlled properties, there are various natures of complex products that will be used in the rubber mixtures that are used later during a mixing process. In the remainder of the description, the various kinds, grades, batches of complex product will be designated by the term "nature" of complex product.

The invention relates to a system and a method for generating production plans for an ongoing campaign, or for a potential campaign, in order to guarantee the execution of planned future campaigns. What is meant by "campaign" is the duration of operation of an internal mixer, or of a mixing plant, using the same recipe. By using the disclosed invention, a known product will be delivered with characteristics that are uniform and stable. The products obtained will be used as raw materials in a mixing line used in a tyre manufacturing cycle.

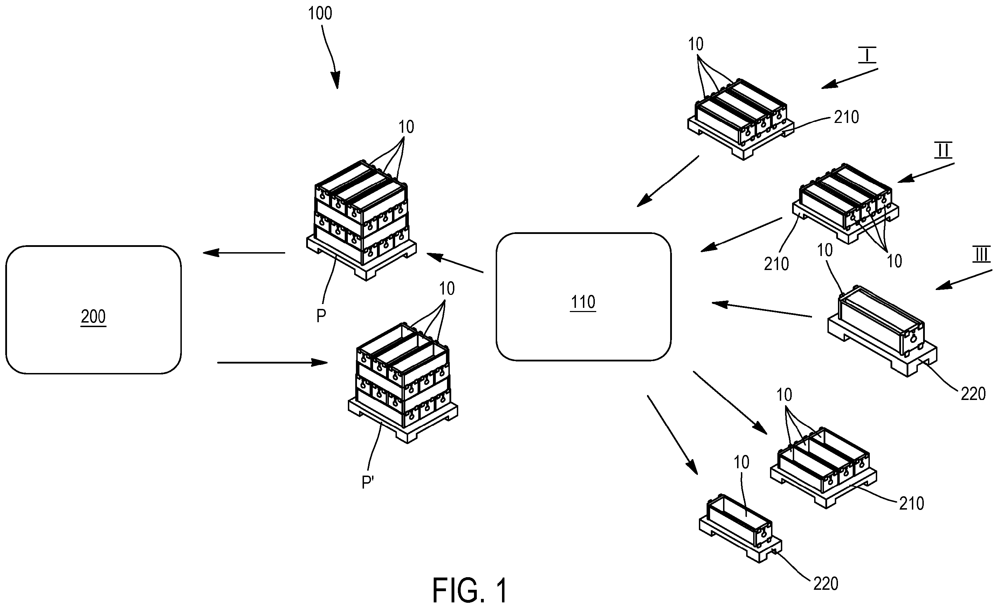

With reference now to the figures, in which the same numerals identify identical elements, Figure 1 depicts one example of a system 100 that realizes a method of identifying and using recovered products for reuse after treatment according to at least one production plan of a rubber mixing method using the identified recovered products for reuse after treatment. The system 100 allows the identification, management and reincorporation of the unused complex products as recovered products for reuse after treatment that can be used during a tyre manufacturing cycle.

The future production plans are generated in anticipation of the planned future campaigns in which recovered products for reuse after treatment are needed, in specified quantities over a specified period. The specified period depends upon the completion of the production plan in progress and also upon the forthcoming production plans.

In order to satisfy a production plan, the system of the invention generates one or more production plans. Each production plan contains one or more campaigns. In certain embodiments, potential campaigns may be identified, for example, by satisfying the current requirements of the campaign and by indicating the execution of the ongoing campaign, then by generating various production plans that will satisfy the requirements of one or more later campaigns according to the specified timescales for executing these campaigns.

The system of the invention determines the feasibility of a mixture associated with the use of a production plan for realizing an ongoing campaign. The "feasibility of the mixture" refers to the ability to conform to the technical references of each material used in the mixture. The "feasibility of the mixture" also refers to the ability to obtain a technical end result for the mixture (i.e., that the recovered products for reuse after treatment that are used maintain their own technical characteristics while at the same time contributing to the desired characteristics of the mixture into which they are incorporated). In certain embodiments, the production plans may be classified using self-learning approaches in which certain production plans are more desirable than others. The system may then classify the different production plans on the basis of the feasibility of the associated mixture.

The system 100 is located downstream of a system or machine for manufacturing complex products (for example, a system or a machine that performs an extrusion process, an assembly process, a stripping process or some other process in which some of what is manufactured cannot be put to use directly in building a tyre). It is envisioned for the system 100 to allow the production of rubber mixtures with diverse and varying properties as determined by the performance requirements of the resulting tyre. The system 100 therefore allows the creation of a process for the recovery of unused complex products by using equipment that allows a production throughput by managing the entry, identification, transfer, storage and exit of groups of recovered products for reuse after treatment. Thus, during a given mixing cycle, recovered products for reuse after treatment that have the properties desired during the ongoing manufacturing cycle are easily located by the system 100.

The complex products are identified as recovered products for reuse after treatment that have been identified for use in at least one rubber-mixing production plan generated by a method of the invention. The complex products are stored in corresponding containers. The containers act as mobile storage making it possible to identify, store and transport the complex products that become the identified recovered products for reuse after treatment. Each of the complex products is characterized by a unique identification (for example, using numerals, codes, RFID identifications, hypertext links or equivalent means) that allows an extrusion or mixing machine (or equivalent) to know the complex product in the process of being manufactured according to a predefined recipe.

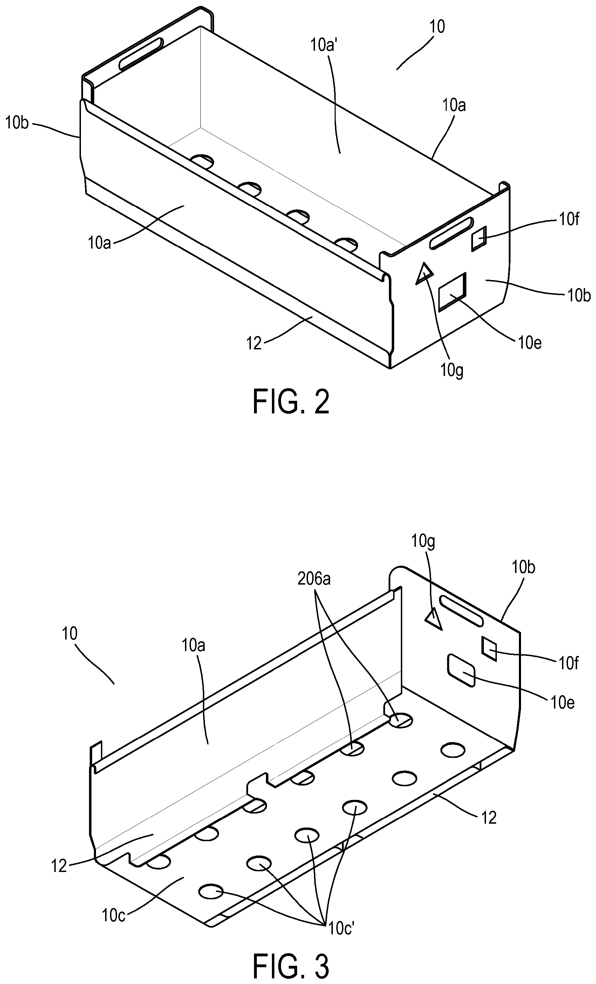

In order to control these specific properties, each recovered product is placed in a container, and each container holds only one recovered product at a time. With reference also to Figures 2 and 3, a container (or "bucket") 10 comes with a pair of long sides 10a, a pair of short sides 10b and a bottom 10c that together form a space to receive a specific recovered product for reuse. Each container 10 includes a pair of legs 12 that extend from the bottom 10c so as to make the container stackable on a pallet or on itself. It is understood that corresponding structure, or an equivalent structure (such as one or more tabs) may be employed along at least a portion of the perimeter of the top of the container 10. All references to a "container" or to the "containers" mean a container 10 as described. The full containers are containers full of recovered products for reuse after treatment for reuse that are stored on corresponding pallets. According to the requirements of the ongoing campaign, the full containers are stored on pallets as a function of the nature of the recovered products for reuse after treatment.

In one embodiment of the container 10, the interior surface 10a' of each long side 10a is inclined with respect to the bottom 10c (for example by an angle of up to 5°) in order to promote release of the recovered product from the full container. An optional non-stick coating may be applied to the interior surface 10a' to make it easier for the complex product to be extracted from the corresponding container.

In order to control these specific properties, each recovered product is placed in a corresponding container 10 that is designated to receive it. The container 10 and the contents (namely, a recovered product having known properties) thereof are identified, known and managed by virtue of an identification means incorporated into the container 10. The system 100 is therefore capable of transferring and of storing each container 10 according to its identification. Identification of the container 10 is performed either manually (for example, using at least one visual and/or tactile identifier) or automatically (for example using numerals, codes, RFID identifications, hypertext links or equivalent means). The invention is described in relation to an RFID identification incorporated into the container 10, but it is understood that other equivalent means of identification can be used.

Identification of the recovered product is married with the identification of the container so that the system 100, by recognizing a particular container, automatically recognizes the nature of the recovered product inside the container. The filling of the container 10 is performed in such a way that its volume is more or less constant and that the weight is predictable.

Referring once again to Figures 2 and 3, in one embodiment of the container 10, the bottom 10c of the container may include several optional orifices 10c' aligned along the length of the bottom. The orifices 10c' are able to accept a corresponding demoulding device (not depicted) with retractable fingers in register with the orifices of the container. The demoulding device and the container 10 constitute a container-demoulding system that is downstream of the system 100.

Still referring to Figures 2 and 3, each short side 10b of the container 10 includes an identification means that works in concert with an automated handling device (for example, a gripper). The identification means includes an RFID tag 10e, positioned on the container 10, that allows an RFID reader positioned on the automated handling device to identify the container.

In one embodiment, there is also a square recess 10f and a triangular recess 10g built into each short side 10b of the container 10. The automated handling device may include corresponding projections such that the recesses and the projections allow the container 10 to be suitably positioned by realigning a projection in a corresponding recess. Of course, the geometry of the recesses and of the projections is not restricted to squares and triangles.

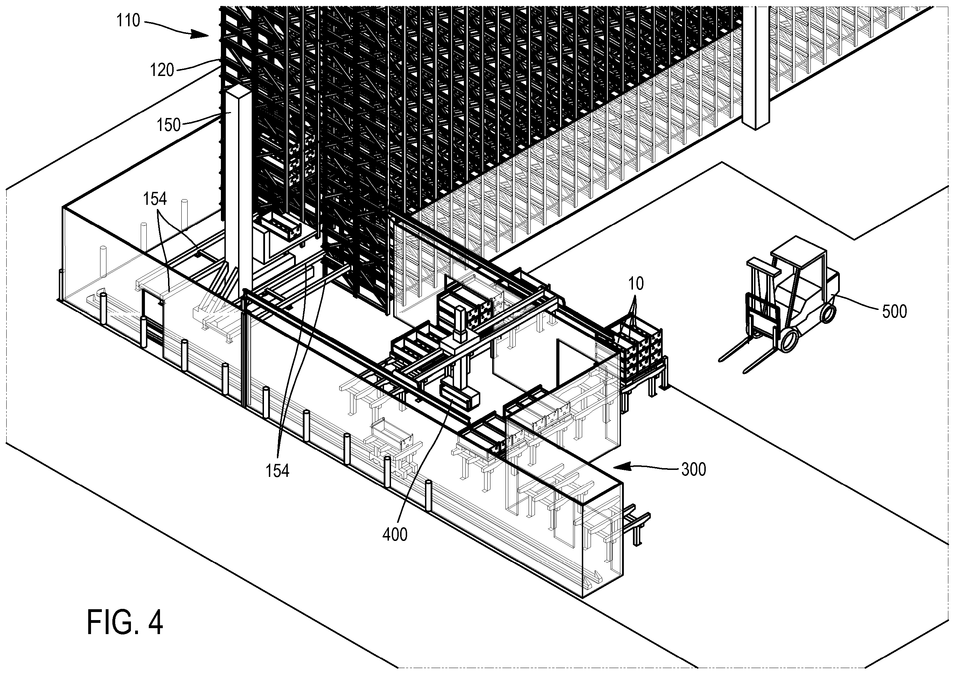

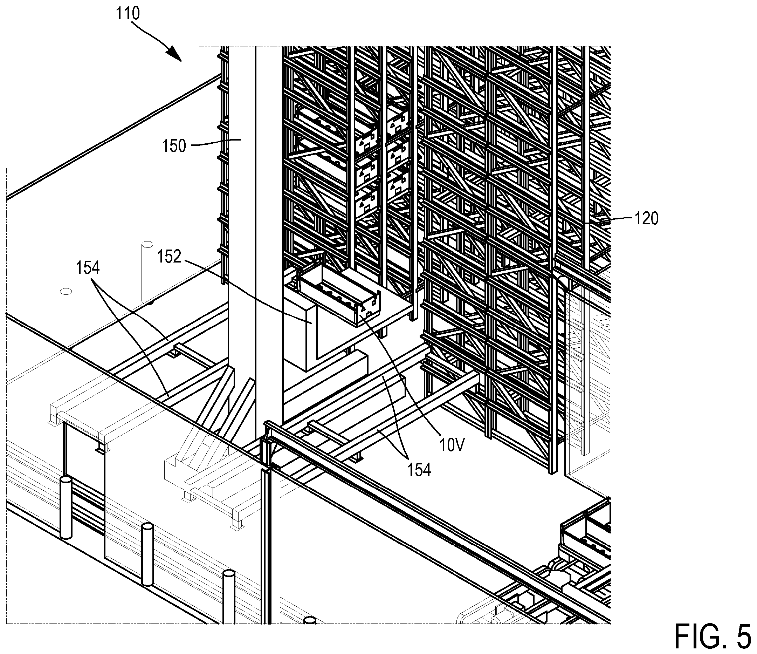

Referring once again to Figure 1 and also to Figures 4, 5 and 6, the system 100 includes a container-storage subsystem (or "container subsystem") 110 in which the unused complex products (or "complex products") originating from at least one manufacturing system, are stored in corresponding containers 10. In one embodiment, the container subsystem 110 may include a storage means that is selected from known automatic means (for example, one or more automatic systems and their equivalents) or known manual means. As described herein, the invention refers to a storage means 120 that is an automatic storage system (for example an "automatic storage and retrieval" system or "ASRS").

Upon storage in the container subsystem 110, these complex products are deemed usable (or "recovered") for at least one tyre manufacturing campaign. The containers 10 full of complex products are identified and stored in the storage means 120. At the moment the complex products arrive in the storage means, the system 100 makes these recovered products for reuse after treatment available to satisfy a production plan.

Referring once again to Figures 4, 5 and 6, the system 100 may also include a pallet-storage subsystem (or "pallet subsystem") 200 in which the pallets of containers of recovered products for reuse after treatment, originating from the container subsystem 110, are stored until the start of a campaign from a generated production plan. The pallet subsystem 200 may also include a storage means (not depicted) that is selected from known automatic means (for example, one or more automatic systems and their equivalents) or known manual means. As described herein, the invention refers to a storage means for the pallet subsystem 200, which storage means is an automatic storage system (for example, an "ASRS").

In one embodiment, each pallet used in the pallet subsystem 200 is capable of storing several containers, full or empty (see, for example, in Figure 1, the pallet P that arrives at the pallet subsystem 200 with the filled containers 10 and the pallet P' that leaves the pallet subsystem 200 with the empty containers 10). While they are in storage in the pallet subsystem 200, these pallets are deemed satisfactory for feeding the mixer with the recovered products for reuse after treatment that are stored in the containers 10 stacked thereon. With the recovered product, having been associated with a pallet, it is therefore possible to guarantee the recipe for the mixture defined by the ongoing campaign. This campaign is programmed to satisfy at least one production plan that carries out a rubber mixing method.

The pallet subsystem 200 enables the execution of a method of managing the pallets of containers of recovered products for reuse after treatment, during which method the availability of the pallets is also optimized. The pallets are complete or incomplete according to the recipe corresponding to an ongoing campaign. In one embodiment, pallets 210 used in the system 100 are capable of storing and carrying several (full or empty) containers 10 (see Figure 1). In one embodiment, pallets 220 used in the system 100 are capable of storing and carrying one (full or empty) container 10 (again, see Figure 1). The containers 10 are designed to be stored in the storage means 120 whatever the number of containers carried by an associated pallet.

Identification of a pallet may be performed by known identification means, either manually (for example, using at least one visual, audio and/or tactile identifier) or automatically (for example using numerals, codes, RFID identifications, hypertext links or equivalent means) so that the identification of the pallet can be married with the identification of the containers 10 (and therefore the identification of the recovered products for reuse after treatment) stored on the pallet. Pallets with containers full of recovered products for reuse after treatment originating from the pallet subsystem 200 may feed a mixer or some other system.

In one embodiment, a pallet may include one or more placement indicators (not depicted) that cover at least part of the surface of the pallet. The placement indicators may be used to ensure correct positioning of the containers on the pallet (as described hereinabove). In certain embodiments, the placement indicators may operate with corresponding sensors on the containers (not depicted) that detect the placement indicators for the automatic placement of the containers on the pallet. In certain embodiments, the placement indicators do not need to be integrated into the pallet (for example, they may be provided on a removable mat that may be placed on the pallet if necessary). The sensors on the containers may use the placement indicators for navigation and placement of containers on the pallets (either directly onto the surface of the pallet or onto a removable mat).

With reference also to Figures 4, 5 and 6, and by way of an illustrative example of the use of the invention disclosed in conjunction with a method for using recovered products for reuse after treatment, the two subsystems are served by a transfer zone 300 that they share in common. The pallets with (full or empty) containers 10 are placed in and retrieved from the zone 300 either manually (using, for example, a known fork-lift truck 500) or automatically. In the transfer zone 300, a mobile gripper 400 is able to place and retrieve the containers 10 with respect to the container subsystem 110 and also with respect to the pallet subsystem 200. The use of a shared transfer zone eliminates redundancy and also contributes to cost reduction by making efficient use of the recovered products for reuse after treatment.

In order to facilitate the placement and retrieval of the containers with respect to the container subsystem 110, the transfer zone 300 receives pallets full of containers full of complex products originating from at least one manufacturing system. Figure 1, which shows the complex products coming from three different processes I, II, III, is given by way of example. It is understood that the system 100, and notably the container subsystem 110, may accommodate complex products coming from one, two or several systems and/or machines for which some of what is produced cannot be exploited directly.

The full containers may be assigned to places in the container subsystem 110 according to the nature of the complex product. For example, it will be understood that the containers may be placed in sectors assigned according to the needs of an ongoing campaign and/or according to the needs of a forthcoming campaign. The sectors of recovered products for reuse after treatment may be established according to products of the same nature or according to combinations of products that are planned for inclusion in a designated rubber mixture. In either case, the containers may be placed on corresponding pallets for delivery to the pallet subsystem 200. The number and make-up of the pallets may thus be chosen at will and varied according to a pre-established campaign.

Also in the transfer zone 300, the full containers remain on standby in the transfer zone until the gripper 400 retrieves the full containers in order to dispose them in their proper place in the storage means 120. The storage means 120 has a robot (or equivalent device) capable of selectively placing and selectively removing at least one container 10 relative to the container subsystem 110. The selective placement and removal are performed on a prediction of recovered products for reuse after treatment that is intended for a generated production plan containing one or more given campaigns. The robot, which is selected from among commercially available robots, is depicted as a stacking device 150 with a shuttle 152 that operates on rails 154 inside the storage means 120. It is understood that the stacking device 150 may be replaced with an equivalent device known to those skilled in the art.

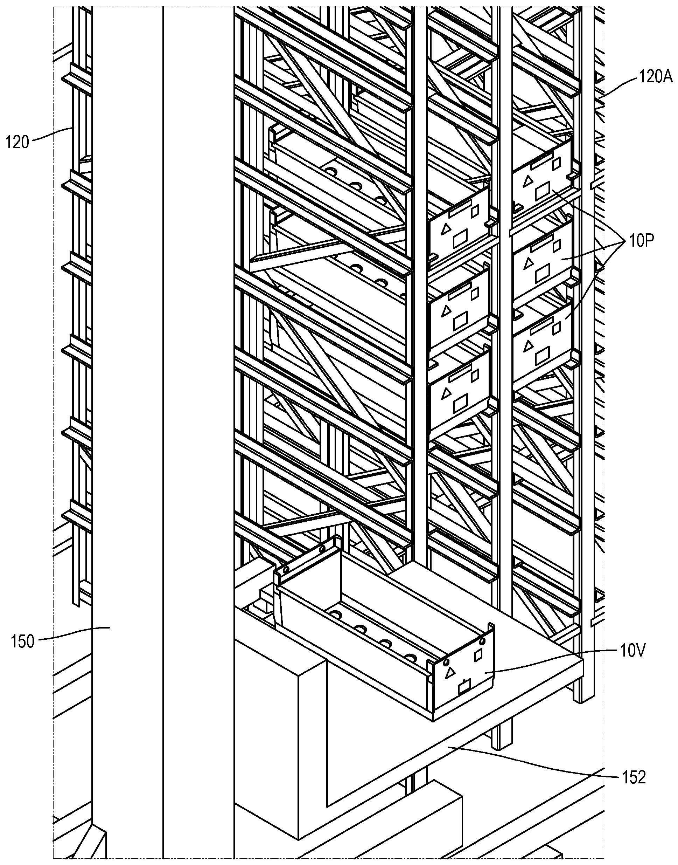

The stacking device 150 positions and retrieves the containers according to at least one production plan generated to satisfy an ongoing production plan and forthcoming production plans. In the example of Figure 6, the storage means 120 of the container subsystem 110 may include a dedicated sector 120A for storing a specific nature of recovered product. The sector 120A includes multiple places, each of these places being assigned to a single container 10. A manufacturing system upstream of the container subsystem 110 indicates its need for an empty container 10V that is assigned to be filled with the recovered product of the same specific nature. The stacking device 150, by means of the shuttle 152, retrieves the empty container 10V from the sector 120A to transfer it to the transfer zone 300. In the transfer zone, the empty container 10V can be stacked on a pallet of similar empty containers (i.e., empty containers associated with the pallet and also associated with a recovered product of the same nature). The pallet full of the empty containers may be sent to the upstream manufacturing system. At the same time, the full containers 10P from the sector 120A remain available for use by the pallet subsystem 200. The system 100 can update the absence of the empty container 10V and the presence of the full containers 10P in order also to update the ongoing production plan.

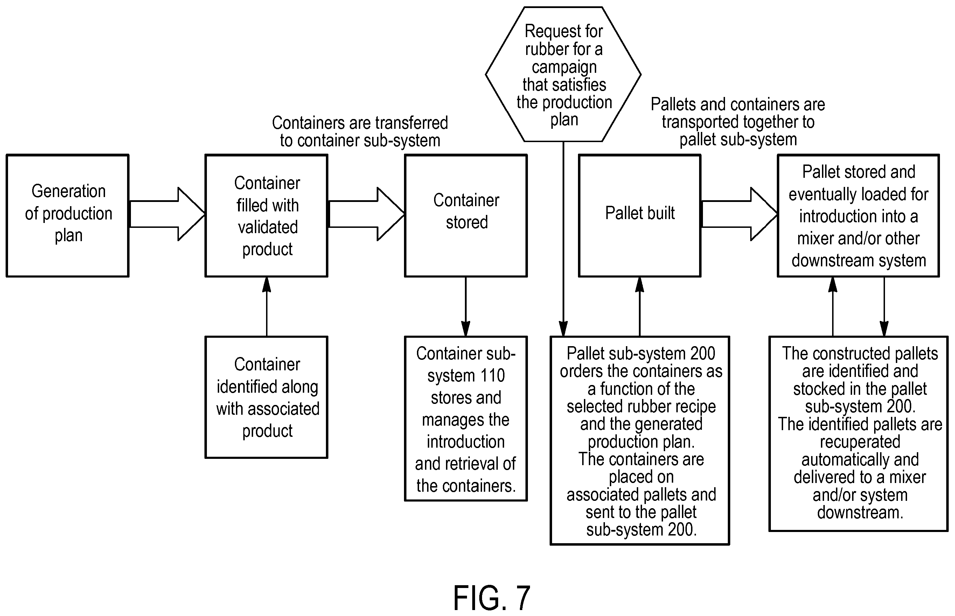

Referring once again to Figure 1 and also to Figure 7, one embodiment of the invention is now described for carrying out a method that satisfies a production plan.

In one embodiment of the method that will satisfy a production plan, the method includes a step of generating at least one production plan in order to carry out at least one rubber mixing method. In some of these embodiments, several production plans may be generated, according to the selection made by a user.

The recovered products for reuse after treatment that will satisfy the generated production plans are identified. Taking into account the time needed to assemble the revered products that are needed for creating the chosen mixture, the system 100 may identify containers according to the minimum time allotted in order to realize the mixing. Furthermore, the system 100 may identify containers on the basis of a criterion pertaining to the make-up of a pallet of recovered products for reuse after treatment that is to be supplied at a determined time in the future. The time units used may be seconds, minutes, hours, days, weeks and months. The time units used may be equivalents of these, for example the time remaining until the system 100 can create a production plan for mixing a rubber for a certain number of products based on the chosen rubber.

Referring once again to Figure 1 and also to Figure 7, containers 10 arrive at the system 100 either on the pallets 210 or on the pallets 220. In particular, the containers 10 arrive at the container subsystem 110 full of complex products originating from the various processes.

The method includes a step of identifying the recovered products for reuse after treatment that satisfy at least one generated production plan. Each container 10 is identified with its complex product. At the moment that each complex product arrives at the container subsystem 110, the complex product has already been deemed usable in a mixing process (i.e., the complex product has been deemed usable as an identified recovered product that will satisfy an ongoing production plan). It therefore becomes a recovered product as it arrives at the subsystem 110. The system 100 may log the arrival date (the day, the time, etc.) of each container 10 in order to manage the time during which each container resides in the container subsystem 110.

The containers 10 are stored in the storage means 120 using known devices (for example, the stacking device 150). The storage means 120 may include defined sectors for different recovered products for reuse after treatment (as described hereinabove). The containers and/or their locations in the storage means 120 can be identified visually or in some other way by one or more known means (for example, one or more RFID tags) to indicate the sector from which the containers are to be retrieved.

The method may include a step of carrying out at least one planning activity that is necessary in order to realize the ongoing production plan and/or at least one forthcoming production plan. The planning activity may include one or more steps, including at least some of the following steps:
- determining the expected levels of storage in the container subsystem 110 and in the pallet subsystem 200 at the end of the ongoing production plan;
- determining the status of the ongoing production plan;
- predicting the mixtures that will be obtained by forthcoming production plans; and
- determining a nature of the recovered products for reuse after treatment that are going to be used in forthcoming production plans (including determining the length of time for which recovered products for reuse after treatment will be stored prior to use thereof).

These determinations may be effected on the basis of one or more factors, including, without limitation, the completion of one or more production plans (and the resulting storage of the recovered products for reuse after treatment that remain in the system 100), the generation of the future production plans, the current level of storage in the container and pallet subsystems, and the flow of the production activity.

The method includes a step of ordering the construction of at least one (complete or incomplete) pallet having containers filled with the identified recovered products for reuse after treatment that satisfy the ongoing production plan. During this step, the pallet subsystem 200 sends an order to the container subsystem 110 to retrieve the containers 10 from the storage means 120 according to the ongoing production plan.

The method also includes a step of automatically retrieving the containers filled with the identified recovered products for reuse after treatment that satisfy the ongoing production plan. In one embodiment, in order to ensure use of recovered products for reuse after treatment for which the expiry date for use has not yet passed, the order to construct the pallets is executed after determining the duration of the containers' storage time. For this embodiment, the order is made to retrieve the containers that have been in storage for the longest duration, these containers being identified as satisfying the ongoing production plan. These identified containers are retrieved before the containers that have been in storage for a shorter length of time.

In one embodiment, the order to construct the pallets is executed so as to obtain a mixture of recovered products for reuse after treatment and at least one fresh mixture. What is meant by "fresh mixtures" are mixtures made up of pure raw materials without the addition of recovered products for reuse after treatment. The method allows the retrieved recovered products for reuse after treatment to be reincorporated into the fresh mixtures after checking the availability of the products of the "recovered" type and of the mixtures of the "fresh" type. The method notably makes it possible to reduce any imbalance between the generation of the complex products and the capacity for recycling such complex products.

The actual date of delivery of the ordered recovered products for reuse after treatment can be determined for the production plans when generating the production plans. If the recovered products for reuse after treatment stored in the container subsystem 110 do not satisfy the first production plan, the next production plan that will use available recovered products for reuse after treatment is prioritized. Thus, each of the current parameters in the container subsystem 110 and the stock provided in the container subsystem 110 is monitored dynamically in order to perform dynamic ranking of the production plans so that there is always at least one production plan that can be executed.

The method includes a step of automatically constructing the ordered pallets according to the ongoing production plan. The containers 10 retrieved from the storage means 120 are sent to the transfer zone 300 to construct the pallets. In Figures 1 and 4, the pallets are constructed using up to nine containers per pallet. It is understood that the number of containers on a pallet is limited only by the capacity of the pallet. It is also understood that a pallet may be "complete" (i.e., the pallet carries the maximum possible number of containers) or "incomplete" (i.e., the pallet carries fewer containers than the maximum possible number). In embodiments that use products of the "recovered" type and mixtures of the "fresh" type in order to satisfy the ongoing production plan, the containers of the two types of products may be placed on the same pallet. All of the constructed pallets are sent from the transfer zone 300 to the pallet subsystem 200 for storage (see pallet P of Figure 1).

The method includes a step of storing the constructed pallets in the pallet subsystem 200. By way of example, the storage means of the pallet subsystem 200 may include sectors assigned to pallets that are constructed to satisfy at least one generated production plan (for example, by the nature of the containers on the pallet, by the planned mixing time, etc.). The system 100 may log the arrival date of each pallet in order to manage the time during which each pallet is stored in the pallet subsystem 200.

In one embodiment, the method includes a step of identifying the pallets that will satisfy the ongoing production plan. These pallets are identified with the associated containers (and therefore the associated recovered products for reuse after treatment). It is envisioned that the system 100 manages the production plans so as to allow the production of rubber mixtures with diverse and varying properties as determined by the performance requirements of the resulting tyre. Thus, during a given production plan, pallets of recovered products for reuse after treatment that have the desired properties can easily be found by the pallet subsystem 200.

In one embodiment, the method includes a step of ordering the automatic retrieval of the identified pallets having containers filled with the identified recovered products for reuse after treatment that satisfy the ongoing production plan. During this step, the pallet subsystem 200 sends an order to the container subsystem 110 in order to retrieve the containers 10 from the storage means according to the recipe of the mixture created at the end of the ongoing production plan. In one embodiment, in order to ensure use of recovered products for reuse after treatment for which the expiry date for use has not yet passed, this order is executed after the determination of the pallets' storage time. For this embodiment, the pallets that have been in storage for the longest time, and that have the natures of recovered products for reuse after treatment that satisfy the production plan, are retrieved before the pallets placed into storage most recently.

In one embodiment, the method includes a step of retrieving the ordered pallets in order to deliver them to the internal mixer or to another system downstream of the pallet subsystem 200. The order is therefore executed pallet by pallet, rather than being an order that is executed container by container. Thus, the method ensures that the pallets retrieved, with the associated recovered products for reuse after treatment, will satisfy the ongoing production plan.

The system 100 may log the retrieval of the ordered pallets and the recovered products for reuse after treatment. The system 100 is capable of updating the storage of the containers in the subsystem 110 and the storage of the pallets in the pallet subsystem 200. If needed, the system 100 may order containers filled with the recovered products for reuse after treatment and/or pallets in order to satisfy at least one forthcoming production plan.

In one embodiment of the method, the method includes the step of emptying the pallets and the containers. In this embodiment, the emptying of the pallets may be performed by a known handling device (for example, a gripper) that removes each container 10 from the associated pallet. In this embodiment, the emptying of the containers may be performed by a system for the management of the pallets of containers of recovered products for reuse after treatment (which system is not depicted), which is located downstream of the system 100. The management system is used to feed the internal mixer with recovered products for reuse after treatment. In one embodiment, the recovered products for reuse after treatment are weighed before being introduced into the internal mixer.

After the pallets and the containers have been emptied, the empty containers are stacked on empty pallets (see pallet P' of Figure 1). The system 100 may return the empty containers to the transfer zone 300 (see Figure 1). From the transfer zone 300, the pallets may be filled with empty containers 10 so that they can be sent to one or more sources of the complex products (see Figure 1). If needed, empty containers 10 may be placed in the storage means 120 in order to satisfy a forthcoming production plan. Enhanced efficiency is therefore obtained by reducing the journeys needed for reloading the pallets.

In certain embodiments, the recovered products for reuse after treatment that can be used in several generated production plans, cannot be used to satisfy a forthcoming production plan until a threshold level of recovered product in the container subsystem 110 is reached. For example, for a recovered product (or for a pallet of associated recovered products for reuse after treatment) that is always used in greater quantity in a frequently executed production plan, this recovered product cannot be used in a smaller quantity in a less frequently executed production plan until there is a sufficient stock of this recovered product to satisfy at least one execution of the most frequently executed production plan. This may be done for the purpose of giving production priority on the basis of the demand for the recovered product, of the surplus of recovered product, of the scarcity of the recovered product and of associated factors.

### EXAMPLE

By way of example, the following comparative results were obtained by simulation to verify a variation in viscosity (a Mooney variation), comparing a control method (i.e., a "first in, first out" or "FIFO" method) and a method of the invention. The Mooney index, also known by the names of viscosity or plasticity index, characterizes solid substances, in a known way. Use is made of an oscillating consistometer as described in standard ASTM D1646 (1999). This plasticity measurement is carried out according to the following principle: the sample, analysed in the raw state (i.e., before curing), is moulded (shaped) in a cylindrical chamber heated to a given temperature (for example 35°C or 100°C). After preheating for one minute, the rotor rotates within the test specimen at 2 revolutions/minute (rpm) and the working torque for maintaining this movement is measured during 4 minutes of rotation. The Mooney viscosity (ML 1+4) is expressed in "Mooney unit" (MU, with 1 MU=0.83 Nm) and corresponds to the value obtained at the end of the 4 minutes.

In simulating a FIFO method, the containers are assigned by campaign in the order in which they appear in the simulation. In the method of the invention, the objective is to minimize the variation in the mean value of a property under study by choosing one or more containers per pallet. It should be understood that any mixing property could be studied (including, without limitation, the viscosity or "Mooney index", the fluidity and the premature vulcanization time).

In the example, the unused complex products are generated by two different manufacturing operations: a tyre building operation and an extrusion operation. Each complex product is identified, and a production plan lasting 28 days is generated. The complex products are placed in the associated containers.

The tyre building operation generates containers of complex products at a known frequency and with a known distribution (approximately 1 or 2 containers per hour). However, during changeovers in the nature of complex products, the extrusion operation generates 3 or 4 containers. The mean fluidity value for a pallet is calculated, and the mean values are compared in order to find a variance from one pallet to another pallet.

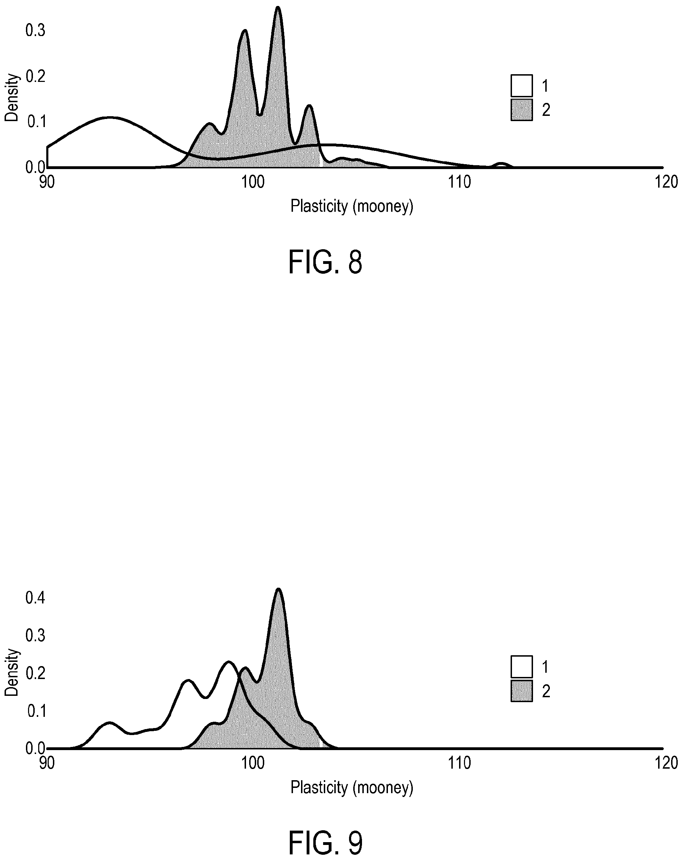

For the two simulations, there are two campaigns carried out. The first campaign is represented by the numeral "1" in the following table and in Figures 8 and 9. The second campaign is represented by the numeral "2" in the following table and in Figures 8 and 9. The results are summarized in the table below:

**TABLE 1: SUMMARY OF RESULTS**

| Mixture | FIFO (standard deviation) | Method of the invention (standard deviation) | Absolute deviation | Magnitude of the effect |
|---|---|---|---|---|
| 1 | 5.50 | 2.19 | -3.312 | 1.1110 |
| 2 | 2.07 | 1.20 | -0.864 | 0.722 |

A note of reminder regarding the magnitude of the effect: the magnitude of the effect is a tool that is used to understand the difference between groups without the effect of sample size. Significant effects are indicated by magnitude-of-the-effect values > 0.3 (reference Cohen 1988).

Figures 8 and 9 show a greater variation in Mooney for the FIFO method as compared with the method of the invention. Although the mean value for a pallet does not change between the two methods, without the method of the invention, the variance of the Mooney properties changes from one pallet to another with a significant impact on the industrial operations that use the recovered products for reuse after treatment. For example, the method of the invention smooths the variance across the recovered products for reuse after treatment that are used in rubber mixing. Thus, the method of the invention limits the need for new extrusion dies needed to adapt to the variations and thus guarantees uniformity of extrusion of the complex products.

One cycle of the method can be performed under the control of one or more PLCs and may include pre-programming of management information. For example, a total number of containers are required when these are offered with a certain number of natures, a total number of empty pallets are available, a number of pallets are on standby, a storage time for a container or for a pallet is determined, etc. The PLC controls the list of containers ordered, the list of pallets ordered and the containers associated with each pallet.

A PLC may be configured to arrange the containers in the container subsystem 110 and the pallets in the pallet subsystem 200. The PLC may identify the containers arranged so that specific containers can be found and retrieved at any moment. Groups of containers 10 are created and may be placed in corresponding sectors so that the mean of the desired properties falls within a predefined tolerance (referred to under the name of "blocking"). The PLC may arrange the containers so that identified containers can be found and retrieved at any moment in order to construct the pallets. Thus, the system allows the unused complex products to be converted into recovered products for reuse after treatment. For example, throughput forecasts and the space required for pallets in storage can be improved.

The system 100 may be part of a tyre production plant. The system 100 may be part of several identical systems supplied to the same plant. Identical systems may be placed in other plants, the containers of one plant being stored in the system of another plant in order to satisfy the production requirements thereof (for example, they may be situated in plants that are geographically remote from one another). In such a case, steps of the method may be carried out in different plants. For example, a container subsystem 110 may receive containers filled with complex products originating from plants that are geographically remote. Furthermore, a container subsystem 110 of a first plant may supply containers filled with recovered products for reuse after treatment to construct the pallets that are ordered by one or more pallet subsystems 200 at one or more plants that are geographically remote. The system therefore provides a solution that adapts itself according to the level of production activity.

The terms "at least one" and "one or more" are used interchangeably. The ranges given as lying "between a and b" encompass the values of "a" and "b".

Although particular embodiments of the disclosed device have been illustrated and described, it will be appreciated that various changes, additions and modifications can be made without departing from the scope of the present description. Thus, no limitation should be imposed on the scope of the invention described, except for the limitations set out in the attached claims.

## Claims

1. A system (100) for identifying and using recovered products for reuse after treatment according to a production plan generated for carrying out at least one rubber mixing process using the identified recovered products for reuse after treatment, the system comprising:
at least one container (10) being provided with a space for filling the container with complex products originating from at least one manufacturing system so as to obtain containers filled with complex products;
a container subsystem (110) in which the complex products are stored in corresponding containers (10), the container subsystem (110) having a storage means (120) with which the containers full of complex products are identified and in which they are stored as containers full of recovered products for reuse after treatment, the identification of each recovered product for reuse after treatment being married with the identification of each container so that the system (100), by recognizing a particular container, automatically recognizes a nature of the recovered product for reuse after treatment contained in the container; and
a pallet subsystem (200) in which pallets of containers of recovered products for reuse after treatment, originating from the container subsystem (110), are stored until the start of a campaign of a production plan generated for carrying out at least one rubber mixing process, the pallet subsystem (200) having a storage means with which pallets are identified and in which pallets are stored according to the production plan, the pallets being constructed according to an automatic construction of at least one pallet having containers filled with recovered products for reuse after treatment that are retrieved from the storage means (120) and that satisfy the production plan;
wherein the complex products comprise semi-finished products made up of at least two rubber mixtures having different properties.

2. The system according to claim 1, further comprising an identification means for marrying the identification of the pallets with the identification of the containers (10) stored on the pallets, in which the identification means is integrated into at least one container (10) retrieved from the storage means (120), at least one pallet of containers of recovered products for reuse after treatment that include the retrieved containers, or both.

3. The system according to claim 2, in which the identification means comprises an RFID tag that allows identification by an RFID reader.

4. The system according to any one of claims 1 to 3, in which the storage means (120) of the container subsystem (110) comprises an automatic storage system.

5. The system according to any one of claims 1 to 4, in which the storage means of the pallet subsystem (200) comprises an automatic storage system.

6. The system according to any one of claims 1 to 5, further comprising a transfer zone (300) shared in common between the container subsystem (110) and the pallet subsystem (200) in which the pallets are constructed before being stored in the pallet subsystem (200).

7. The system according to claim 6, further comprising a movable gripper (400) for placing and retrieving containers (10) in relation to the container subsystem (110) and also in relation to the pallet subsystem (200).

8. The system according to any one of claims 1 to 7, further comprising a robot for selectively placing and selectively removing at least one container (10) with respect to the container subsystem (110) according to at least one production plan generated to satisfy an ongoing production plan and one or more forthcoming production plans.

9. The system according to claim 8, in which the robot comprises a stacking device (150) having a shuttle (152) that operates on rails (154) within the storage means (120).

10. The system according to any one of claims 2 to 9, in which the container (10) includes a pair of long sides (10a), a pair of short sides (10b) and a bottom (10c) that together form a space for filling the container with a specific complex product, and each container (10) has legs (12) that extend below the bottom (10c) so as to make the container stackable on a pallet or on itself.

11. The system according to claim 10, in which each short side (10b) of the container (10) includes the identification means that operates with an automated handling device.

12. The system according to claim 10 or claim 11, further comprising a square recess (10f) and a triangular recess (10g) built into each short side (10b) of the container (10) in correspondence with corresponding projections of the automated handling device so that the recesses and the projections allow the container (10) to be suitably positioned by realigning a projection in a corresponding recess.

13. The system of any one of claims 10 to 12, in which the bottom (10c) of the container (10) includes several optional orifices (10c') aligned along the length of the bottom to accept retractable fingers of a corresponding demoulding device.

14. The system of any one of claims 1 to 13, in which the filled containers are assigned to places in the container subsystem (110) according to the nature of the complex product, and the constructed pallets are assigned to places in the pallet subsystem (200) according to the production plan.

15. The system of any one of Claims 1 to 14, in which the system (100) is part of a tyre production installation comprising at least one mixer that is fed with the recovered products for reuse after treatment.

## Patentansprüche

1. System (100) zum Identifizieren und Verwenden von zurückgewonnenen Produkten zur Wiederverwendung nach einer Behandlung gemäß einem Produktionsplan, der zum Ausführen mindestens eines Kautschukmischprozesses unter Verwendung der identifizierten zurückgewonnenen Produkte zur Wiederverwendung nach einer Behandlung erstellt wurde, wobei das System umfasst:
mindestens einen Behälter (10), der mit einem Raum zum Füllen des Behälters mit komplexen Produkten versehen ist, die aus mindestens einem Herstellungssystem stammen, um mit komplexen Produkten gefüllte Behälter zu erhalten; ein Behälterteilsystem (110), in dem die komplexen Produkte in entsprechenden Behältern (10) gelagert werden, wobei das Behälterteilsystem (110) ein Lagermittel (120) aufweist, mit dem die Behälter voller komplexer Produkte identifiziert werden und in dem sie als Behälter voller zurückgewonnener Produkten zur Wiederverwendung nach einer Behandlung gelagert werden,
wobei die Identifikation jedes zurückgewonnenen Produkts zur Wiederverwendung nach einer Behandlung mit der Identifikation jedes Behälters verknüpft wird, so dass das System (100) durch Erkennen eines bestimmten Behälters automatisch eine Beschaffenheit des in dem Behälter enthaltenen zurückgewonnenen Produkts zur Wiederverwendung nach einer Behandlung erkennt; und
ein Palettenteilsystem (200), in dem Paletten von Behältern von zurückgewonnenen Produkten zur Wiederverwendung nach einer Behandlung, die aus dem Behälterteilsystem (110) stammen, bis zum Start einer Kampagne eines Produktionsplans gelagert werden, der zum Ausführen mindestens eines Kautschukmischprozesses erstellt wurde, wobei das Palettenteilsystem (200) ein Lagermittel aufweist, mit dem Paletten identifiziert werden und in dem Paletten gemäß dem Produktionsplan gelagert werden, wobei die Paletten gemäß einem automatischen Aufbau aus mindestens einer Palette aufgebaut werden, die Behälter aufweist, die mit zurückgewonnenen Produkten zur Wiederverwendung nach einer Behandlung gefüllt sind, die aus dem Lagermittel (120) entnommen werden und die den Produktionsplan erfüllen;
wobei die komplexen Produkte halbfertige Produkte umfassen, die aus mindestens zwei Kautschukmischungen mit unterschiedlichen Eigenschaften bestehen.

2. System nach Anspruch 1, ferner umfassend ein Identifikationsmittel zum Verknüpfen der Identifikation der Paletten mit der Identifikation der auf den Paletten gelagerten Behälter (10), wobei das Identifikationsmittel in mindestens einen aus dem Lagermittel (120) entnommenen Behälter (10), mindestens eine Palette von Behältern von zurückgewonnenen Produkten zur Wiederverwendung nach einer Behandlung, die die entnommenen Behälter enthalten, oder beide integriert ist.

3. System nach Anspruch 2, wobei das Identifikationsmittel eine RFID-Kennzeichnung umfasst, die eine Identifikation durch ein RFID-Lesegerät ermöglicht.

4. System nach einem der Ansprüche 1 bis 3, wobei das Lagermittel (120) des Behälterteilsystems (110) ein automatisches Lagersystem umfasst.

5. System nach einem der Ansprüche 1 bis 4, wobei das Lagermittel des Palettenteilsystems (200) ein automatisches Lagersystem umfasst.

6. System nach einem der Ansprüche 1 bis 5, ferner umfassend eine Transferzone (300), die zwischen dem Behälterteilsystem (110) und dem Palettenteilsystem (200) gemeinsam genutzt wird, wobei die Paletten vor ihrer Lagerung in dem Palettenteilsystem (200) aufgebaut werden.

7. System nach Anspruch 6, ferner umfassend einen beweglichen Greifer (400) zum Platzieren und Entnehmen von Behältern (10) in Relation zu dem Behälterteilsystem (110) und auch in Relation zu dem Palettenteilsystem (200).

8. System nach einem der Ansprüche 1 bis 7, ferner umfassend einen Roboter zum selektiven Platzieren und selektiven Entfernen mindestens eines Behälters (10) in Bezug auf das Behälterteilsystem (110) gemäß mindestens einem Produktionsplan, der erstellt wurde, um einen laufenden Produktionsplan und einen oder mehrere bevorstehende(n) Produktionsplan/Produktionspläne zu erfüllen.

9. System nach Anspruch 8, wobei der Roboter eine Stapelvorrichtung (150) mit einer Pendelvorrichtung (152) umfasst, die auf Schienen (154) innerhalb des Lagermittels (120) betrieben wird.

10. System nach einem der Ansprüche 2 bis 9, wobei der Behälter (10) ein Paar langer Seiten (10a), ein Paar kurzer Seiten (10b) und einen Boden (10c) enthält, die zusammen einen Raum zum Füllen des Behälters mit einem spezifischen komplexen Produkt bilden, und wobei jeder Behälter (10) Beine (12) aufweist, die sich unterhalb des Bodens (10c) erstrecken, so dass der Behälter auf einer Palette oder auf sich selbst stapelbar ist.

11. System nach Anspruch 10, wobei jede kurze Seite (10b) des Behälters (10) das Identifikationsmittel enthält, das mit einer automatisierten Handhabungsvorrichtung betrieben wird.

12. System nach Anspruch 10 oder Anspruch 11, ferner umfassend eine quadratische Aussparung (10f) und eine dreieckige Aussparung (10g), die in jede kurze Seite (10b) des Behälters (10) entsprechend entsprechenden Vorsprüngen der automatisierten Handhabungsvorrichtung integriert sind, so dass die Aussparungen und die Vorsprünge ermöglichen, dass der Behälter (10) durch Neuausrichten eines Vorsprungs in einer entsprechenden Aussparung auf geeignete Weise positioniert wird.

13. System nach einem der Ansprüche 10 bis 12, wobei der Boden (10c) des Behälters (10) mehrere optionale Öffnungen (10c') enthält, die entlang der Länge des Bodens ausgerichtet sind, um einziehbare Finger einer entsprechenden Entformungsvorrichtung aufzunehmen.

14. System nach einem der Ansprüche 1 bis 13, wobei die gefüllten Behälter gemäß der Beschaffenheit des komplexen Produkts Orten in dem Behälterteilsystem (110) zugewiesen werden und wobei die aufgebauten Paletten gemäß dem Produktionsplan Orten in dem Palettenteilsystem (200) zugewiesen werden.

15. System nach einem der Ansprüche 1 bis 14, wobei das System (100) Teil einer Reifenproduktionsanlage ist, die mindestens einen Mischer umfasst, der mit den zurückgewonnenen Produkten zur Wiederverwendung nach einer Behandlung gespeist wird.

## Revendications

1. Système (100) pour identifier et pour utiliser des produits valorisés pour réutilisation après traitement selon un plan de production généré pour réaliser au moins un procédé de mélangeage de caoutchouc en utilisant les produits valorisés pour réutilisation après traitement identifiés, le système comprenant:
au moins un contenant (10) étant fourni avec un espace pour remplissage du contenant de produits complexés en provenance d'au moins un système de fabrication pour obtenir des contenants remplis de produits complexés ;
un sous-système contenant (110) dans lequel des produits complexés sont stockés dans des contenants (10) correspondants, le sous-système contenant (110) ayant un moyen de stockage (120) auquel des contenants remplis de produits complexés sont identifiés et stockés comme des contenants remplis des produits valorisés pour réutilisation après traitement, l'identification de chaque produit valorisé pour réutilisation après traitement étant harmonisée avec l'identification de chaque contenant pour que le système (100), en reconnaissant un contenant particulier, reconnaisse automatiquement une nature du produit valorisé pour réutilisation après traitement dans le contenant ; et
un sous-système palette (200) dans lequel des palettes de contenants de produits valorisés pour réutilisation après traitement, en provenance du sous-système contenant (110), sont stockées jusqu'au début d'une campagne d'un plan de production généré pour réaliser au moins un procédé de mélangeage de caoutchouc, le sous-système palette (200) ayant un moyen de stockage auquel des palettes sont identifiées et stockées en fonction du plan de production, les palettes étant construites en fonction d'une construction automatique d'au moins une palette comprenant des contenants remplis des produits valorisés pour réutilisation après traitement qui sont récupérés du moyen de stockage (120) et qui satisfont le plan de production ;
dans lequel les produits complexés comprennent des produits semi-finis réalisés à partir d'au moins deux mélanges de caoutchouc ayant des propriétés différentes.

2. Système selon la revendication 1, comprenant en outre un moyen d'identification pour harmoniser l'identification des palettes avec l'identification des contenants (10) stockés sur les palettes, dans lequel le moyen d'identification est intégré sur au moins un contenant (10) récupéré du moyen de stockage (120), sur au moins d'une palette de contenants de produits valorisés pour réutilisation après traitement qui comportent les contenants récupérés, ou sur les deux.

3. Système selon la revendication 2, dans lequel le moyen d'identification comprend un tag RFID qui permet l'identification par un lecteur RFID.

4. Système selon l'une quelconque des revendications 1 à 3, dans lequel le moyen de stockage (120) du sous-système contenant (110) comprend un système de stockage automatique.

5. Système selon l'une quelconque des revendications 1 à 4, dans lequel le moyen de stockage du sous-système palette (200) comprend un système de stockage automatique.

6. Système selon l'une quelconque des revendications 1 à 5, comprenant en outre une zone de transfert (300) commune entre le sous-système contenant (110) et le sous-système palette (200) dans laquelle les palettes sont construites avant leur stockage au sous-système palette (200).

7. Système selon la revendication 6, comprenant en outre un préhenseur (400) qui est mobile pour le placement et la récupération des contenants (10) par rapport au sous-système contenant (110) et aussi par rapport au sous-système palette (200).

8. Système selon de l'une quelconque des revendications 1 à 7, comprenant en outre un robot pour placer sélectivement et pour retirer sélectivement au moins un contenant (10) par rapport au sous-système contenant (110) en fonction d'au moins un plan de production généré pour satisfaire un plan de production en cours et des plans de production à venir.

9. Système selon la revendication 8, dans lequel le robot comprend un dispositif d'empilage (150) ayant une navette (152) qui fonctionne avec des rails (154) à l'intérieur du moyen de stockage (120).

10. Système selon l'une quelconque des revendications 2 à 9, dans lequel le contenant (10) est fourni avec des grands côtés (10a), des petits côtés (10b) et un fond (10c) qui forment ensemble un espace pour remplissage du contenant d'un produit complexé spécifique, et chaque contenant (10) ayant des pieds (12) qui s'étendent en bas du fond (10c) pour rendre le contenant empilable sur une palette ou sur lui-même.

11. Système selon la revendication 10, dans lequel chaque petit côté (10b) du contenant (10) comprend le moyen d'identification qui fonctionne avec un dispositif de manutention automatisé.

12. Système selon la revendication 10 ou la revendication 11, comprenant en outre un renfoncement carré (10f) et un renfoncement triangle (10g) intégrés à chaque petit côté (10b) du contenant (10) en correspondance avec des saillies correspondantes du dispositif de manutention automatisé, de sorte que les renfoncements et les saillies permettent un bon positionnement du contenant (10) grâce au recentrage d'une saillie dans un renfoncement correspondant.

13. Système de l'une quelconque des revendications 10 à 12, dans lequel le fond (10c) du contenant (10) comprend plusieurs orifices facultatifs (10c') alignés le long de la longueur du fond pour recevoir des doigts escamotables d'un dispositif de démoulage correspondant.

14. Système de la revendication de l'une quelconque des revendications 1 à 13, dans lequel les contenants remplis sont attribués à des places dans le sous-système contenant (110) en fonction d'une nature du produit complexé, et les palettes construites sont attribuées à des places dans le sous-système palette (200) en fonction du plan de production.

15. Système de l'une quelconque des revendications 1 à 14, dans lequel le système (100) est une partie d'une installation de production de pneumatiques comportant au moins un mélangeur qui est alimenté avec les produits valorisés pour réutilisation après traitement.
